# EUROPEAN PATENT SPECIFICATION

(11) **EP 3 871 960 B1**
(45) Date of publication and mention of the grant of the patent: **03.04.2024**
(21) Application number: 19876093.6
(22) Date of filing: 25.10.2019
(51) Int. Cl.: B62J 6/025, B62J 6/026, B60Q 1/00, B60Q 1/068, F21S 41/148, F21S 41/19, F21S 41/32, F21S 45/00, F21S 45/47

(54) **HEADLAMP DEVICE FOR STRADDLE-TYPE VEHICLE**
SCHEINWERFER FÜR GRÄTSCHSITZFAHRZEUGE
DISPOSITIF DE PHARE POUR VÉHICULE DU TYPE À SELLE

(30) Priority: 26.10.2018 JP 2018201582
(43) Date of publication of application: 01.09.2021
(73) Proprietor: Kawasaki Motors, Ltd., Akashi-shi, Hyogo 673-8666 (JP); Varroc Lighting Systems, Italy SPA, 10020 Cambiano (TO) (IT)
(72) Inventor: SANDO, Masaya, 650-8670 Hyogo (JP); MARUO, Minoru, 650-8670 Hyogo (JP); COPPOLA, Giuseppe, 10020 Cambiano (TO) (IT)
(74) Representative: Witte, Weller & Partner Patentanwälte mbB
(86) International application number: PCT/JP2019/041910
(87) International publication number: WO 2020/085491

(56) References cited:
- EP-A1- 2 682 331
- EP-B1- 2 792 584
- WO-A1-2018/074147
- DE-A1-102016 112 331
- JP-A- H10 228 804
- JP-A- H10 228 804
- JP-A- H11 238 405
- JP-A- H11 273 409
- JP-A- 2003 068 134
- JP-A- 2014 072 180
- JP-A- 2014 086 328
- JP-A- 2014 203 588
- JP-A- 2017 081 222
- JP-A- 2017 202 712

## Description

### Technical Field

The present invention relates to a headlamp device adapted for use in a straddle vehicle and including an optical axis adjustment mechanism and a power supply circuit board.

### Background Art

A known headlamp device for use in a straddle vehicle includes: a light source device such as an LED; a reflector that reflects light emitted from the light source device and directs the light forward; and a power supply circuit board that adjusts the voltage of electric power supplied from a battery to a level suitable for the light source device (see Patent Literature 1, for example). In the configuration of Patent Literature 1, the reflector is supported by an optical axis adjustment mechanism so as to be tiltable relative to a lamp housing. The power supply circuit board is placed inside the lamp housing and mounted on the rear wall of the housing.

PTL 2, which forms the basis for the preamble of claim 1, discloses a head light device for a vehicle in which a bowlike reflector is arranged, with an opening directed to a front, in the inside space between a lens and a lamp housing. A lighting control circuit unit is integrally equipped with an ignitor, and actuating part, in a control circuit main body; and also is integrally fitted with a socket to be integrally fitted to the reflector back surface. The lighting control circuit unit can be compactly integrated, with a dead space reduced without connecting the main body and the actuating part by using a wire harness or a coupler, by integrally constituting all circuits except a battery and a discharge lamp bulb.

### Citation List

### Patent Literature

PTL 1: Japanese Laid-Open Patent Application Publication No. 2017-202712
PTL 2: JP H10 228804 A

### Summary of Invention

### Technical Problem

The power supply circuit board is connected to the light source device via an electric wire. During optical axis adjustment, the electric wire is inevitably moved because the reflector is tilted relative to the housing. Thus, the electric wire could be subjected to an undesired stress depending on the layout of the electric wire. Additionally, the electric wire needs to have an extra length since the positional relationship between the light source device and the power supply circuit board is changed during optical axis adjustment.

The present invention is directed to an optical axis adjustment mechanism-equipped headlamp device of a straddle vehicle and aims to prevent an undesired stress from acting on an electric wire connecting a power supply circuit board to a light source device during optical axis adjustment and eliminate the need for the electric wire to have an extra length.

### Solution to Problem

A headlamp device of a straddle vehicle according to claim 1 includes: a plurality of light source devices; a reflector unit to which the light source devices are secured, the reflector unit having a reflecting surface by which light emitted from the light source devices is reflected forward; a power supply circuit board located behind the reflector unit to adjust a voltage of electric power to be supplied to each light source device; a lamp housing accommodating the light source devices, the reflector unit, and the power supply circuit board; and an optical axis adjustment mechanism supporting the reflector unit in a manner permitting the reflector unit to tilt relative to the lamp housing, wherein the power supply circuit board is secured to the reflector unit. The power supply circuit board is placed in a position where a normal to the power supply circuit board extends in a front-rear direction. The reflector unit comprises a pair of left and right light emission portions and a recess portion recessed from back to front of the reflector unit, the recess portion being located between the left and right light emission portions; and the power supply circuit board is shaped to be longer in an up-down direction than in a left-right direction and placed into the recess portion from behind.

In the above configuration, the power supply circuit board is secured to the reflector unit tiltable by the optical axis adjustment. Thus, the positional relationship between the power supply circuit board and the light source devices remain unchanged during optical axis adjustment. As such, the electric wire connecting the power supply circuit board to the light source devices is prevented from being moved and subjected to an undesired stress during optical axis adjustment. Additionally, the need for the electric wire to have an extra length can be eliminated.

In an exemplary configuration, the reflector unit may include a reflector having the reflecting surface and a bracket to which the reflector is secured, the optical axis adjustment mechanism may support the bracket in a manner permitting the bracket to tilt relative to the lamp housing, and the power supply circuit board may be secured to the bracket.

In this configuration, the bracket is provided separately from the reflector, and the power supply circuit board is secured to the bracket. Thus, a portion for securing of the power supply circuit board can be included in the bracket, and the variety of possible shapes of the reflector can be increased.

According to the invention, the power supply circuit board is placed in a position where a normal to the power supply circuit board extends in a front-rear direction.

In this configuration, the dimension of the lamp housing in the front-rear direction can be reduced to achieve size reduction of the headlamp device, and the power supply circuit board can easily be secured to the back surface of the reflector unit from behind.

According to the invention, the reflector unit include a pair of left and right light emission portions and a recess portion recessed from back to front of the reflector unit, the recess portion being located between the left and right light emission portions, and the power supply circuit board is shaped to be longer in an up-down direction than in a left-right direction and placed into the recess portion from behind.

In this configuration, the power supply circuit board placed in a position where its normal extends in the front-rear direction can be efficiently located in the space between the left and right light emission portions while sufficiently wide areas are provided for the left and right light emission portions.

In an exemplary configuration, the light source devices may be main light source devices for a headlamp, the power supply circuit board may include a headlamp board portion and a position lamp board portion, and the headlamp device may further include an auxiliary light source device for a position lamp, the auxiliary light source device being mounted on the position lamp board portion of the power supply circuit board.

In this configuration, the power supply circuit board serves both as a board for the headlamp and as a board for the position lamp. This reduces the number of required components and allows for an increase in board area and therefore an improvement in heat radiation performance.

In an exemplary configuration, the position lamp board portion may be exposed outside the reflector unit when viewed from front, and the auxiliary light source device may be mounted on a front surface of the position lamp board portion.

In this configuration, the position lamp directly mounted on the power supply circuit board can emit light forward. This reduces the number of wires and light-directing components for the position lamp.

In an exemplary configuration, each light source device may include a connection portion to which the electric wire is connected, and the power supply circuit board may be located ahead of the connection portion.

In this configuration, the power supply circuit board is far enough from the rear wall of the lamp housing to provide a sufficiently wide space between the power supply circuit board and the lamp housing. This increases the flexibility in arranging the electric wire and the heat radiation performance of the power supply circuit board, and makes it easy to prevent the power supply circuit board from interfering with the lamp housing during optical axis adjustment.

In an exemplary configuration, each light source device may include an LED element and an LED board on which the LED element is mounted, the connection portion may be a connector mounted on the LED board, and the connector may be located outside and behind the reflector unit.

In this configuration, the electric wire connected to the power supply circuit board can easily be connected to the connector of the light source device, and the arrangement of the electric wire can easily be carried out.

In an exemplary configuration, the LED board may be placed in a position where a normal to the LED board extends in an up-down direction, the LED board may have a first surface on which the LED element is mounted and a second surface opposite the first surface, a heat sink may be joined to and in surface contact with the second surface of the LED board, and the heat sink may have a portion located outside and behind the reflector unit.

In this configuration, the heat radiation area can be increased to improve the heat radiation performance.

### Advantageous Effects of Invention

The present invention makes it possible, in an optical axis adjustment mechanism-equipped headlamp device of a straddle vehicle, to prevent an undesired stress from acting on an electric wire connecting a power supply circuit board to a light source device during optical axis adjustment and eliminate the need for the electric wire to have an extra length.

### Brief Description of Drawings

FIG 1 is a left side view of a motorcycle according to an embodiment.
FIG 2 is a left front perspective view of a headlamp device of the motorcycle of FIG 1.
FIG 3 is a right rear perspective view of the headlamp device of FIG 2.
FIG 4 is a front view of an internal assembly of the headlamp device of FIG 2.
FIG 5 is a schematic cross-sectional side view of a reflector and main light source devices of the headlamp device of FIG 4.
FIG 6 is a bottom rear perspective view of the internal assembly of the headlamp device of FIG 4.
FIG 7 is a back view of the headlamp device's internal assembly of FIG 6.

### Description of Embodiments

Hereinafter, embodiments will be described with reference to the drawings. The directions mentioned in the following description are based on the direction in which the rider of a motorcycle faces.

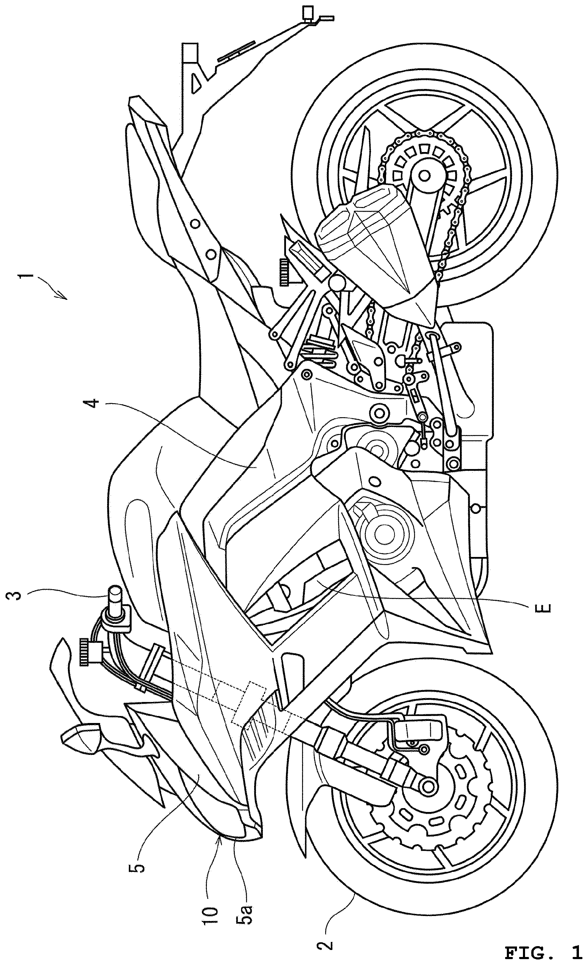

FIG 1 is a left side view of a motorcycle 1 according to an embodiment. The motorcycle 1 shown in FIG 1 is an example of a straddle vehicle on which the rider is seated in a straddling position. The motorcycle 1 includes a bar-shaped handle 3 for steering of a front wheel 2. A headlamp device 10 is secured to the front of a vehicle body frame 4 of the motorcycle 1. Thus, when the handle 3 is rotated, the headlamp device 10 does not move in conjunction with the rotation of the handle 3. A cowl 5 is mounted on the front of the vehicle body frame 4 of the motorcycle 1 to cover the headlamp device 10 and a prime mover E (e.g., an internal combustion engine or electric motor) from the front and side. The cowl 5 includes an opening 5a through which the headlamp device 10 is exposed to the outside when viewed from the front.

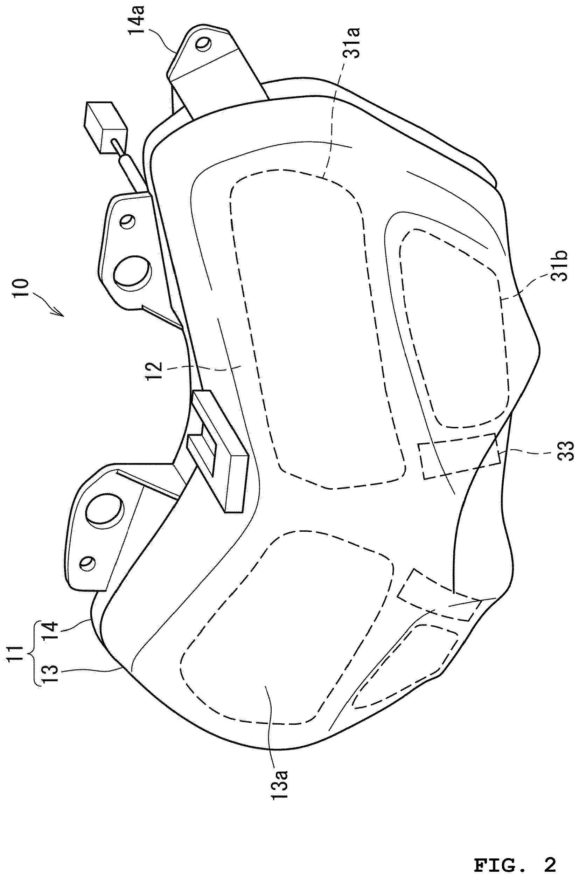

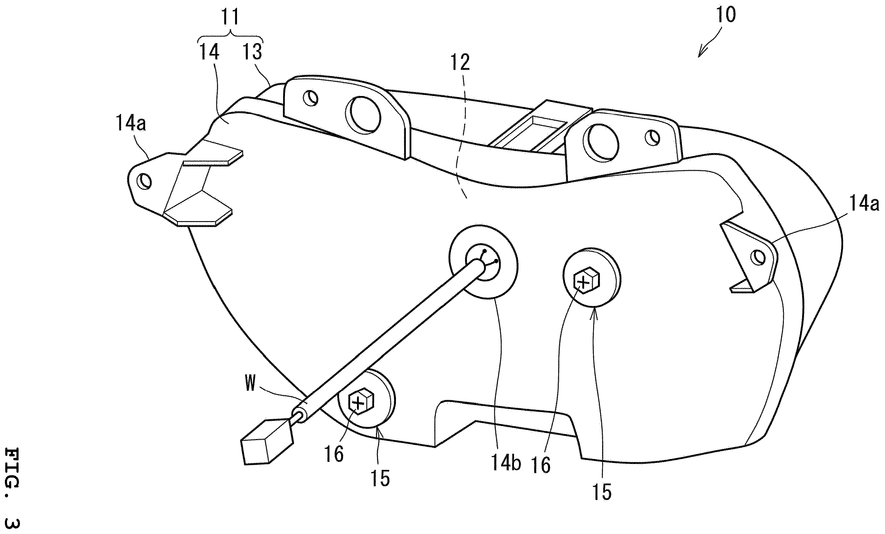

FIG 2 is a left front perspective view of the headlamp device 10 of the motorcycle 1 of FIG 1. FIG 3 is a right rear perspective view of the headlamp device 10 of FIG 2. Referring to FIGS. 2 and 3, the headlamp device 10 includes a lamp housing 11 and an internal assembly 12 accommodated in the lamp housing 11. The lamp housing 11 includes a front housing member 13 defining an accommodation space opening rearward and a rear housing member 14 closing the rear opening of the accommodation space of the front housing member 13.

The rear housing member 14 includes attaching portions 14a for attaching the headlamp device 10 to the vehicle body frame 4. The rear housing member 14 includes an insertion hole 14b. Through the insertion hole 14b of the rear housing member 14 passes an electric wire W via which electric power from a battery (not shown) mounted on the motorcycle 1 is supplied to the internal assembly 12.

The lamp housing 11 has a streamlined shape. Specifically, the lamp housing 11 is shaped such that the dimension in the vehicle width direction and the dimension in the up-down direction increase from the front end toward the rear end. In front view, the headlamp device 10 is located at the center of the motorcycle 1 in the vehicle width direction. The central portion of the lamp housing 11 in the vehicle width direction is longer in the front-rear direction than the edge portions of the lamp housing 11 which are opposed in the vehicle width direction.

The front housing member 13 includes light-transmissive portions 13a through which light emitted from the internal assembly 12 passes forward. The internal assembly 12 includes a pair of left and right light emission portions 31a for low beams, a pair of left and right light emission portions 31b for high beams, and a pair of left and right light emission portions 33 for a position lamp. The details of the internal assembly 12 will be described later. The light-transmissive portions 13a of the front housing member 13 are located in front of the light emission portions 31a, 31b, and 33, respectively.

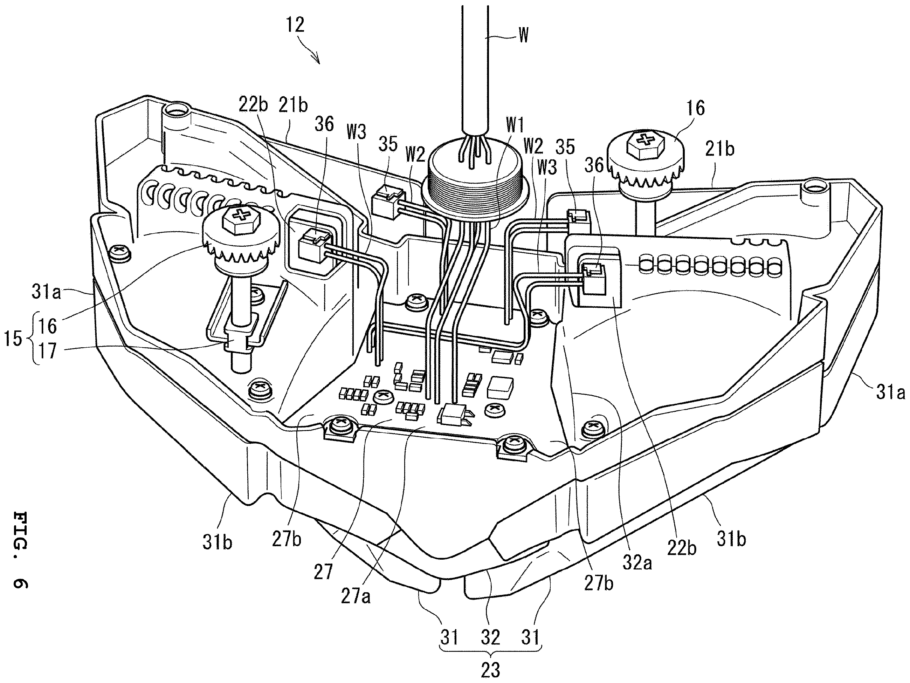

The headlamp device 10 includes an optical axis adjustment mechanism 15. The optical axis adjustment mechanism 15 supports the internal assembly 12 in a manner permitting the internal assembly 12 to tilt relative to the lamp housing 11. The optical axis adjustment mechanism 15 is not limited to a particular configuration and may have any of various known configurations. For example, the optical axis adjustment mechanism 15 includes a screw 16 attached to the rear housing member 14. The screw 16 is threaded into a female threaded member 17 (see FIG 6) attached to the internal assembly 12. The internal assembly 12 is supported by a pivot member (not shown) which is at a different location than the female threaded member 17. Upon forward or reverse rotation of the screw 16, the female threaded member 17 moves in the front-rear direction, and the internal assembly 12 is tilted about the pivot member. Thus, the optical axis adjustment for light emitted from the internal assembly 12 can be made by rotating the screw 16.

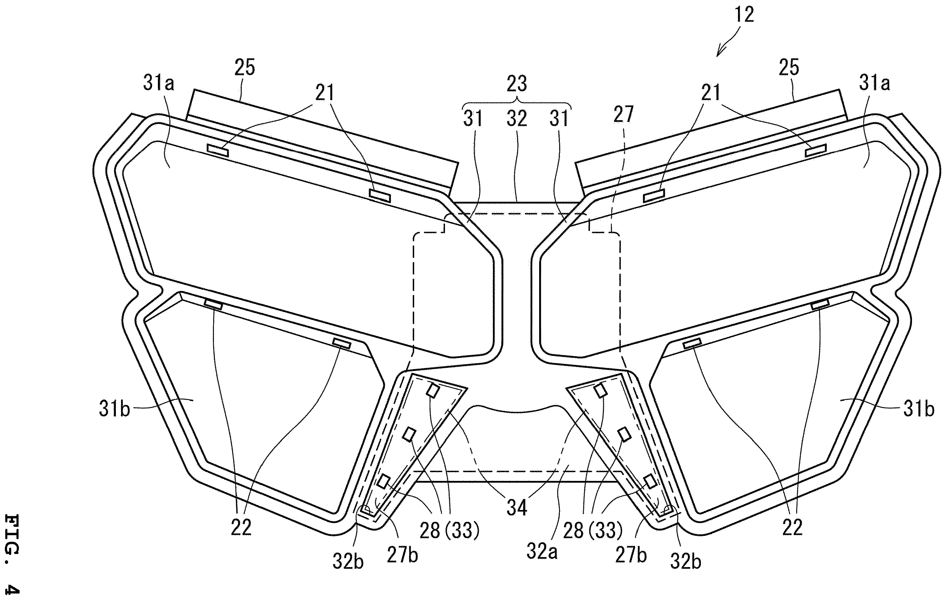

FIG 4 is a front view of the internal assembly 12 of the headlamp device 10 of FIG 2. Referring to FIG 4, the internal assembly 12 accommodated in the lamp housing 11 (see FIG 2) of the headlamp device 10 includes a plurality of main light source devices 21 and 22, a reflector unit 23, heat sinks 25 and 26, a power supply circuit board 27, and a plurality of auxiliary light source devices 28.

The main light source devices 21 and 22 are light sources for the headlamp. The main light source devices 21 are light sources for low beams, and the main light source devices 22 are light sources for high beams. The reflector unit 23 includes a pair of reflectors 31 shaped to be bilaterally symmetrical to each other and a bracket 32 to which the reflectors 31 arranged in the left-right direction are secured. Each reflector 31 includes a first light emission portion 31a for low beams and a second light emission portion 31b for high beams which is located below the first light emission portion 31a.

Thus, the internal assembly 12 includes a pair of left and right first light emission portions 31a for low beams and a pair of left and right second light emission portions 31b for high beams. The distance between the two second light emission portions 31b in the left-right direction is larger than the distance between the two first light emission portions 31a in the left-right direction. Each first light emission portion 31a includes a reflecting surface, by which light emitted from the main light source devices 21 is reflected and directed forward. Each second light emission portion 31b includes a reflecting surface, by which light emitted from the main light source devices 22 is reflected and directed forward.

A central portion 32a of the bracket 32 is located between the two reflectors 31 and exposed to the outside when viewed from the front. The central portion 32a of the bracket 32 is provided with a pair of openings 32b through which the light emission portions 33 for the position lamp are exposed to the outside when viewed from the front. Each light emission portion 33 is a light source group including a plurality of auxiliary light source devices 28. The openings 32b are located below the first light emission portions 31a and between the second light emission portions 31b. Each opening 32b is disposed along the adjacent second light emission portion 31b and shaped to extend longitudinally in the up-down direction. Transparent covers 34 are attached to the bracket 32 to close the openings 32b and cover the auxiliary light source devices 28 from the front.

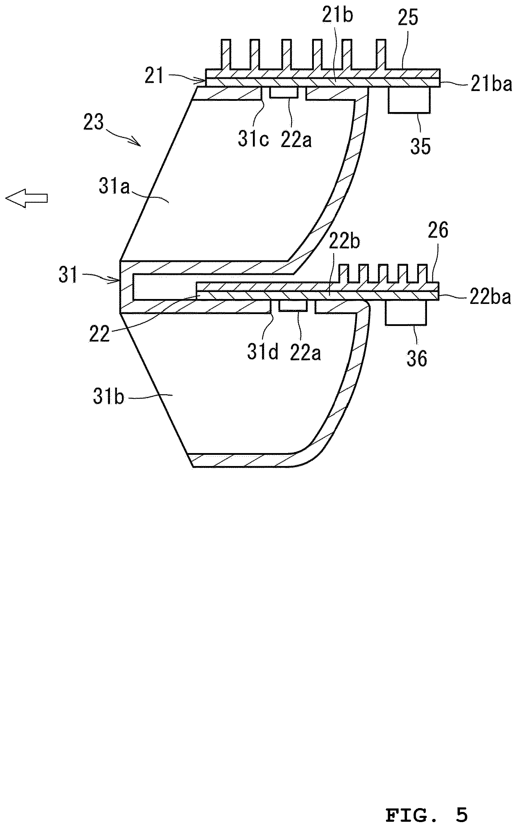

The heat sinks 25 are located above the main light source devices 21 for low beams. The heat sinks 25 absorb and radiate heat coming from the main light source devices 21. The heat sinks 26 (see FIG 5) are located above the main light source devices 22 for high beams. The heat sinks 26 absorb and radiate heat coming form the main light source devices 22. The electric wire W (see FIG 3) is connected to the power supply circuit board 27, and the power supply circuit board 27 receives electric power through the electric wire W and supplies the electric power to each of the main light source devices 21 and 22 and auxiliary light source devices 28. The power supply circuit board 27 is located behind and secured to the bracket 32.

FIG 5 is a schematic cross-sectional side view of the reflector 31 and the main light source devices 21 and 22 of the headlamp device 10 of FIG 4. In FIG 5, the bracket 32 is omitted. The main light source devices 21 and 22 are secured to the reflector 31. The main light source device 21 includes an LED element 21a and an LED board 21b on which the LED element 21a is mounted. Likewise, the main light source device 22 includes an LED element 22a and an LED board 22b on which the LED element 22a is mounted. The LED elements 21a and 22a are directly secured to the LED boards 21b and 22b and electrically connected to the circuits of the LED boards 21b and 22b.

Each of the first and second light emission portions 31a and 31b of the reflector 31 is substantially in a U-shape opening forward. The upper walls of the first and second light emission portions 31a and 31b are provided with through holes 31c and 31d, respectively. The LED board 21b is secured (e.g., adhered) to the reflector 31 and in surface contact with the upper surface of the upper wall of the first light emission portion 31a, and the LED board 22b is secured (e.g., adhered) to the reflector 31 and in surface contact with the upper surface of the upper wall of the second light emission portion 31b. Thus, each of the LED boards 21b and 22b is placed in a position where the normal to the board extends in the up-down direction.

The LED element 21a is mounted on the lower surface of the LED board 21b. The LED element 21a is located inside the through hole 31c of the upper wall of the first light emission portion 31a and faces the reflecting surface of the first light emission portion 31a. The LED element 22a is mounted on the lower surface of the LED board 22b. The LED element 22a is located inside the through hole 31d of the upper wall of the second light emission portion 31b and faces the reflecting surface of the second light emission portion 31b. The heat sinks 25 and 26, which are plate-shaped, are joined (e.g., adhered) to and in surface contact with the upper surfaces of the LED boards 21b and 22b (namely, the surfaces opposite those on which the LED elements 21a and 22a are mounted), respectively.

The LED boards 21b and 22b have portions (protruding portions 21ba and 22ba) located outside and behind the reflector unit 23 (the reflector 31 and the bracket 32). The heat sinks 25 and 26 also have portions located outside and behind the reflector unit 23. That is, the portions 21ba and 22ba of the LED boards 21b and 22b and the portions 25a and 26a of the heat sinks 25 and 26 protrude rearward from the reflector unit 23 when viewed in the vertical direction. In other words, the protruding portions 21ba and 22ba of the LED boards 21b and 22b and the protruding portions 25a and 26a of the heat sinks 25 and 26 do not overlap the reflector unit 23 when viewed from below.

Connectors 35 and 36 (connection portions) are mounted on the lower surfaces of the protruding portions 21ba and 22ba of the LED boards 21b and 22b, respectively. Thus, the connectors 35 and 36 are directly secured to the LED boards 21b and 22b and electrically connected to the circuits of the LED boards 21b and 22b.

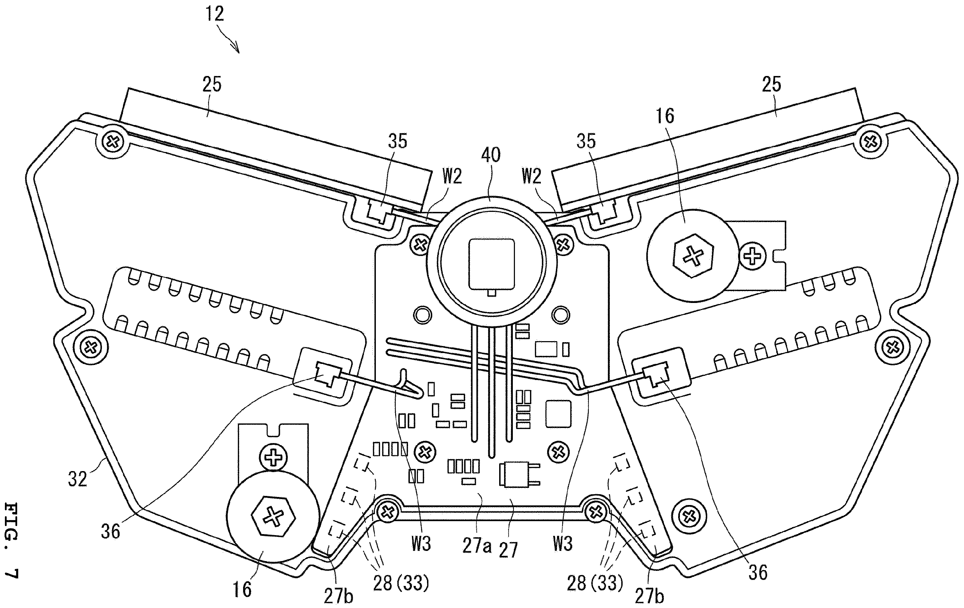

FIG 6 is a bottom rear perspective view of the internal assembly 12 of the headlamp device 10 of FIG 4. FIG. 7 is a back view of the headlamp device 10's internal assembly 12 of FIG 6. Referring to FIGS. 6 and 7, the reflector unit 23 includes a recess portion 32a recessed from back to front of the reflector unit 23 and located between the left and right light emission portions 31a and between the left and right light emission portions 31b. In the present embodiment, the recess portion 32a is located at the center of the bracket 32 in the left-right direction.

The power supply circuit board 27 is placed into the recess portion 32a from behind and secured to the back of the bracket 32. The power supply circuit board 27 is a circuit board for adjusting the voltage of electric power to be supplied to each of the main light source devices 21 and 22. The power supply circuit board 27 is placed in a position where the normal to the power supply circuit board 27 extends in the front-rear direction. Specifically, the power supply circuit board 27 is disposed such that the mounting surface of the power supply circuit board 27 on which the electronic components are mounted faces rearward and the other surface of the power supply circuit board 27 opposite the mounting surface faces forward. The recess portion 32a of the bracket 32 is shaped to be longer in the up-down direction than in the left-right direction, and the power supply circuit board 27 is also shaped to be longer in the up-down direction than in the left-right direction.

The electric wire W, via which electric power from the battery (not shown) is supplied to the internal assembly 12, is connected to a tap 40 attached to the insertion hole 14b of the rear housing member 14. An electric wire W1 connects the tap 40 to the power supply circuit board 27. Thus, electric power coming through the electric wire W is supplied to the power supply circuit board 27 via the electric wire W1. An electric wire W2 connects the power supply circuit board 27 to the connector 35 mounted on the LED board 21b. An electric wire W3 connects the power supply circuit board 27 to the connector 36 mounted on the LED board 22b. Thus, the voltage of electric power delivered through the electric wire W1 is adjusted by the power supply circuit board 27, and the electric power with the adjusted voltage is supplied to the LED boards 21b and 22b via the electric wires W2 and W3. The connection portions of the LED boards 21b and 22b, to which the electric wires W2 and W3 are connected, need not be connectors 35 and 36 and may be soldered joints.

The power supply circuit board 27 is located ahead of the connectors 35 and 36. The connectors 35 and 36 are located outside and behind the reflector unit 23 (bracket 32). Thus, the connectors 35 and 36 protrude rearward from the reflector unit 23 (bracket 32) when viewed from below. As such, the electric wire W2 is located ahead of the rear end of the LED board 21b and behind the power supply circuit board 27, and the electric wire W 3 is located ahead of the rear end of the LED board 22b and behind the power supply circuit board 27.

The power supply circuit board 27 includes a headlamp board portion 27a and a pair of left and right position lamp board portions 27b. The headlamp board portion 27a adjusts the voltage of electric power delivered through the electric wire W1 and supplies the electric power with the adjusted voltage to the LED boards 21b and 22b via the electric wires W2 and W3. The position lamp board portion 27b receives electric power delivered through the electric wire W1 and supplies the electric power directly to the auxiliary light source devices 28. That is, the power supply circuit board 27 supplies electric power to the auxiliary light source devices 28 for the position lamp without voltage adjustment. For example, the auxiliary light source devices 28 are LED elements, and the position lamp board portion 27b serves as an LED board. The auxiliary light source devices 28 which may be LED elements are mounted on the front surface of the position lamp board portion 27b. The auxiliary light source devices 28 which may be LED elements are secured directly to the position lamp board portion 27b and electrically connected to the circuit of the position lamp board portion 27b.

The left and right position lamp board portions 27b protrude from the headlamp board portion 27a downward and outward in the left-right direction. The position lamp board portions 27b are located in the same plane as the headlamp board portion 27a. The position lamp board portions 27b are disposed in the openings 32b of the bracket 32. The position lamp board portions 27b and the auxiliary light source devices 28 are exposed outside the reflector unit 23 through the openings 32b when viewed from the front (see FIG. 4). The transparent covers 34 are attached to the bracket 32 to close the openings 32b, and thus the position lamp board portions 27b and auxiliary light source devices 28 are covered by the transparent covers 34 from the front.

In the configuration described above, the power supply circuit board 27 is secured to the reflector unit 23 tiltable by the optical axis adjustment. Thus, the positional relationship between the power supply circuit board 27 and the light source devices 21 and 22 remain unchanged during optical axis adjustment. As such, the electric wires W2 and W3 connecting the power supply circuit board 27 to the light source devices 21 and 22 are prevented from being moved and subjected to an undesired stress during optical axis adjustment. Additionally, the need for the electric wires W2 and W3 to have an extra length can be eliminated.

The bracket 32 is provided separately from the reflectors 31, and the power supply circuit board 27 is secured to the bracket 32. Thus, a portion for securing of the power supply circuit board 27 can be included in the bracket 32, and the variety of possible shapes of the reflectors 31 can be increased.

The power supply circuit board 27 is placed in a position where its normal extends in the front-rear direction. Thus, the dimension of the lamp housing 11 in the front-rear direction can be reduced to achieve size reduction of the headlamp device 10, and the power supply circuit board 27 can easily be secured to the back surface of the reflector unit 23 from behind. Additionally, the power supply circuit board 27, which is shaped to extend longitudinally in the up-down direction, is placed into the central recess portion 32a of the reflector unit 23 from behind. Thus, the power supply circuit board 27 placed in a position where its normal extends in the front-rear direction can be efficiently located in the space between the left and right light emission portions 31a and between the left and right light emission portions 32a while sufficiently wide areas are provided for the light emission portions 31a and 32a.

The power supply circuit board 27 serves both as a board for the headlamp and as a board for the position lamp. This reduces the number of required components and allows for an increase in board area and therefore an improvement in heat radiation performance. The position lamp board portions 27b are exposed outside the reflector unit 23 when viewed from the front, and the light sources (auxiliary light source devices 28) of the position lamp, which are directly mounted on the power supply circuit board 27, emit light forward. This reduces the number of wires and light-directing components for the position lamp.

The power supply circuit board 27 is located ahead of the connectors 35 and 36 of the main light source devices 21 and 22. Thus, the power supply circuit board 27 is far enough from the rear housing member 14 to provide a sufficiently wide space between the power supply circuit board 27 and the lamp housing 11. This increases the flexibility in arranging the electric wires W1 to W3 and the heat radiation performance of the power supply circuit board 27, and makes it easy to prevent the power supply circuit board 27 from interfering with the rear housing member 14 during optical axis adjustment.

The connectors 35 and 36 of the main light source devices 21 and 22 are located outside and behind the reflector unit 23. Thus, the electric wires W2 and W3 connected to the power supply circuit board 27 can easily be connected to the connectors 35 and 36, and the arrangement of the electric wires W2 and W 3 can easily be carried out. Each of the LED boards 21b and 22b is placed in a position where its normal extends in the up-down direction, and the heat sinks 25 and 26 jointed to and in surface contact with the upper surfaces (second surfaces) of LED boards 21b and 22b have portions located outside and behind the reflector unit 23. Thus, the heat radiation area can be increased to improve the heat radiation performance.

The reflector unit 23 may consist of one member instead of being made up of two or more members (the reflectors 31 and the bracket 32). The power supply circuit board 27 may be placed in a position different from that in the above embodiment. The power supply circuit board 27 need not include the position lamp board portions 27b. That is, the position lamp board portions 27b may be provided separately from the headlamp board portion 27a.

### Reference Signs List

1 motorcycle
10 headlamp device
11 lamp housing
12 internal assembly
15 optical axis adjustment mechanism
21 main light source device
21a, 22a LED element
21b, 22b LED board
22 main light source device
23 reflector unit
25, 26 heat sink
27 power supply circuit board
27a headlamp board portion
27b position lamp board portion
28 auxiliary light source device
31 reflector
31a first light emission portion
31b second light emission portion
32 bracket
32a recess portion
32b opening
35, 36 connector
W2, W3 electric wire

## Claims

1. A headlamp device (10) of a straddle vehicle (1), the headlamp device (10) comprising:
at least one light source device (21);
a reflector unit (23) to which the at least one light source device (21) is secured, the reflector unit (23) having a reflecting surface by which light emitted from the at least one light source device (21) is reflected forward;
a power supply circuit board (27) located behind the reflector unit (23) to adjust a voltage of electric power to be supplied to the at least one light source device (21);
a lamp housing (11) accommodating the at least one light source device (21), the reflector unit (23), and the power supply circuit board (27); and
an optical axis adjustment mechanism (15) supporting the reflector unit (23) in a manner permitting the reflector unit (23) to tilt relative to the lamp housing (11), wherein
the power supply circuit board (27) is secured to the reflector unit (23),
**characterized in that**:
the at least one light source device (21) includes a plurality of light source devices (21);
the power supply circuit board (27) is placed in a position where a normal to the power supply circuit board (27) extends in a front-rear direction;
the reflector unit (23) comprises a pair of left and right light emission portions (31a) and a recess portion (32a) recessed from back to front of the reflector unit (23), the recess portion (32a) being located between the left and right light emission portions (31a); and
the power supply circuit board (27) is shaped to be longer in an up-down direction than in a left-right direction and placed into the recess portion (32a) from behind.

2. The headlamp device (10) according to claim 1, wherein
The reflector unit (23) comprises a reflector (31) having the reflecting surface and a bracket (32) to which the reflector (31) is secured,
the optical axis adjustment mechanism (15) supports the bracket (32) in a manner permitting the bracket (32) to tilt relative to the lamp housing (11), and
the power supply circuit board (27) is secured to the bracket (32).

3. The headlamp device (10) according to claim 1 or 2, wherein
the light source devices (21) are main light source devices (21) for a headlamp,
the power supply circuit board (27) comprises a headlamp board portion (27a) and a position lamp board portion (27b), and
the headlamp device (10) further comprises an auxiliary light source device (28) for a position lamp, the auxiliary light source device (28) being mounted on the position lamp board portion (27b) of the power supply circuit board (27).

4. The headlamp device (10) according to claim 3, wherein
the position lamp board portion (27b) is exposed outside the reflector unit (23) when viewed from front, and
the auxiliary light source device (28) is mounted on a front surface of the position lamp board portion (27b).

5. The headlamp device (10) according to any one of claims 1 to 4, wherein
each light source device (21) comprises a connection portion (35) to which an electric wire (W2) is connected, and
the power supply circuit board (27) is located ahead of the connection portion (35).

6. The headlamp device (10) according to claim 5, wherein
each light source device (21) comprises an LED element (21a) and an LED board (21b) on which the LED element (21a) is mounted,
the connection portion (35) is a connector (35) mounted on the LED board (21b), and
the connector (35) is located outside and behind the reflector unit (23).

7. The headlamp device (10) according to claim 6, wherein
the LED board (21b) is placed in a position where a normal to the LED board (21b) extends in an up-down direction,
the LED board (21b) has a first surface on which the LED element (21a) is mounted and a second surface opposite the first surface,
a heat sink (25) is joined to and in surface contact with the second surface of the LED board (21b), and
the heat sink (25) has a portion located outside and behind the reflector unit (23).

## Patentansprüche

1. Scheinwerfervorrichtung (10) eines Grätschsitzfahrzeugs (1), wobei die Scheinwerfervorrichtung (10) umfasst:
wenigstens eine Lichtquellenvorrichtung (21);
eine Reflektoreinheit (23), an der die wenigstens eine Lichtquellenvorrichtung (21) befestigt ist, wobei die Reflektoreinheit (23) eine reflektierende Oberfläche aufweist, durch die von der wenigstens einen Lichtquellenvorrichtung (21) emittiertes Licht nach vorne reflektiert wird;
eine Stromversorgungsplatine (27), die hinter der Reflektoreinheit (23) angeordnet ist, um eine elektrische Spannung einzustellen, die der wenigstens einen Lichtquellenvorrichtung (21) zugeführt werden soll;
ein Lampengehäuse (11), in dem die wenigstens eine Lichtquellenvorrichtung (21), die Reflektoreinheit (23) und die Stromversorgungsplatine (27) untergebracht sind; und
einen Mechanismus (15) zur Einstellung der optischen Achse, der die Reflektoreinheit (23) in einer Weise trägt, die es ermöglicht, dass die Reflektoreinheit (23) relativ zum Lampengehäuse (11) geneigt werden kann, wobei
die Stromversorgungsplatine (27) an der Reflektoreinheit (23) befestigt ist,
**dadurch gekennzeichnet, dass**:
die wenigstens eine Lichtquellenvorrichtung (21) mehrere Lichtquellenvorrichtungen (21) aufweist;
die Stromversorgungsplatine (27) in einer Position angeordnet ist, in der sich eine Normale zur Stromversorgungsplatine (27) in einer Richtung von vorne nach hinten erstreckt;
die Reflektoreinheit (23) ein Paar linke und rechte Lichtaustrittsabschnitte (31a) und einen Aussparungsabschnitt (32a) umfasst, der von der Rückseite zur Vorderseite der Reflektoreinheit (23) ausgespart ist, wobei der Aussparungsabschnitt (32a) zwischen den linken und rechten Lichtaustrittsabschnitten (31a) angeordnet ist; und
die Stromversorgungsplatine (27) so geformt ist, dass sie in einer Richtung von oben nach unten länger ist als in einer Richtung von links nach rechts und von hinten in den Aussparungsabschnitt (32a) eingesetzt wird.

2. Scheinwerfervorrichtung (10) gemäß Anspruch 1, wobei
die Reflektoreinheit (23) einen Reflektor (31) mit der reflektierenden Oberfläche und eine Halterung (32), an der der Reflektor (31) befestigt ist, umfasst,
der Mechanismus zur Einstellung der optischen Achse (15) die Halterung (32) in einer Weise trägt, dass die Halterung (32) relativ zum Lampengehäuse (11) geneigt werden kann, und
die Stromversorgungsplatine (27) an der Halterung (32) befestigt ist.

3. Scheinwerfervorrichtung (10) gemäß Anspruch 1 oder 2, wobei
die Lichtquellenvorrichtungen (21) Hauptlichtquellenvorrichtungen (21) für einen Scheinwerfer sind,
die Stromversorgungsplatine (27) einen Scheinwerferplatinenabschnitt (27a) und einen Positionslampenplatinenabschnitt (27b) umfasst, und
die Scheinwerfervorrichtung (10) ferner eine Hilfslichtquellenvorrichtung (28) für eine Positionslampe umfasst, wobei die Hilfslichtquellenvorrichtung (28) auf dem Positionslampenplatinenabschnitt (27b) der Stromversorgungsplatine (27) angebracht ist.

4. Scheinwerfervorrichtung (10) gemäß Anspruch 3, wobei
der Positionslampenplatinenabschnitt (27b) bei Betrachtung von vorn außerhalb der Reflektoreinheit (23) freiliegt und
die Hilfslichtquellenvorrichtung (28) an einer vorderen Fläche des Positionslampenplatinenabschnitts (27b) montiert ist.

5. Scheinwerfervorrichtung (10) gemäß einem der Ansprüche 1 bis 4, wobei
jede Lichtquellenvorrichtung (21) einen Verbindungsabschnitt (35) umfasst, mit dem ein elektrischer Draht (W2) verbunden ist, und
die Stromversorgungsplatine (27) sich vor dem Verbindungsabschnitt (35) befindet.

6. Scheinwerfervorrichtung (10) gemäß Anspruch 5, wobei
jede Lichtquellenvorrichtung (21) ein LED-Element (21a) und eine LED-Platine (21b) umfasst, auf der das LED-Element (21a) montiert ist,
der Verbindungsabschnitt (35) ein Verbinder (35) ist, der auf der LED-Platine (21b) montiert ist, und
der Verbinder (35) sich außerhalb und hinter der Reflektoreinheit (23) befindet.

7. Scheinwerfervorrichtung (10) gemäß Anspruch 6, wobei
die LED-Platine (21b) in einer Position angeordnet ist, in der sich eine Normale zur LED-Platine (21b) in einer Aufwärts-Abwärts-Richtung erstreckt,
die LED-Platine (21b) eine erste Fläche, auf der das LED-Element (21a) montiert ist, und eine zweite Fläche gegenüber der ersten Fläche aufweist,
eine Wärmesenke (25) mit der zweiten Fläche der LED-Platine (21b) zusammengefügt ist und mit dieser in Oberflächenkontakt steht, und
die Wärmesenke (25) einen Abschnitt hat, der sich außerhalb und hinter der Reflektoreinheit (23) befindet.

## Revendications

1. Dispositif de phare (10) d'un véhicule à enfourcher (1), le dispositif de phare (10) comprenant :
au moins un dispositif de source de lumière (21) ;
une unité réflectrice (23) à laquelle l'au moins un dispositif de source de lumière (21) est fixé, l'unité réflectrice (23) ayant une surface réfléchissante par laquelle la lumière émise depuis l'au moins un dispositif de source de lumière (21) est réfléchie vers l'avant ;
une carte de circuit d'alimentation électrique (27) située derrière l'unité réflectrice (23) pour régler une tension d'énergie électrique devant être fournie à l'au moins un dispositif de source de lumière (21) ;
un boîtier de phare (11) accueillant l'au moins un dispositif de source de lumière (21), l'unité réflectrice (23) et la carte de circuit d'alimentation électrique (27) ; et
un mécanisme de réglage d'axe optique (15) supportant l'unité réflectrice (23) d'une manière permettant à l'unité réflectrice (23) de s'incliner par rapport au boîtier de phare (11), dans lequel
la carte de circuit d'alimentation électrique (27) est fixée à l'unité réflectrice (23),
**caractérisé en ce que** :
l'au moins un dispositif de source de lumière (21) comporte une pluralité de dispositifs de source de lumière (21) ;
la carte de circuit d'alimentation électrique (27) est placée dans une position où une normale à la carte de circuit d'alimentation électrique (27) s'étend dans une direction allant d'avant en arrière ;
l'unité réflectrice (23) comprend une paire de parties d'émission de lumière gauche et droite (31a) et une partie en retrait (32a) entaillée d'arrière en avant de l'unité réflectrice (23), la partie en retrait (32a) étant située entre les parties d'émission de lumière gauche et droite (31a) ; et
la carte de circuit d'alimentation électrique (27) est façonnée pour être plus longue dans une direction allant de haut en bas que dans une direction allant de gauche à droite et placée dans la partie en retrait (32a) par l'arrière.

2. Dispositif de phare (10) selon la revendication 1, dans lequel
l'unité réflectrice (23) comprend un réflecteur (31) ayant la surface réfléchissante et une patte de fixation (32) à laquelle le réflecteur (31) est fixé,
le mécanisme de réglage d'axe optique (15) supporte la patte de fixation (32) d'une manière permettant à la patte de fixation (32) de s'incliner par rapport au boîtier de phare (11), et
la carte de circuit d'alimentation électrique (27) est fixée à la patte de fixation (32).

3. Dispositif de phare (10) selon la revendication 1 ou 2, dans lequel
les dispositifs de source de lumière (21) sont des dispositifs de source de lumière principaux (21) pour un phare,
la carte de circuit d'alimentation électrique (27) comprend une partie de carte de phare (27a) et une partie de carte de feu de position (27b), et
le dispositif de phare (10) comprend en outre un dispositif de source de lumière auxiliaire (28) pour un feu de position, le dispositif de source de lumière auxiliaire (28) étant monté sur la partie de carte de feu de position (27b) de la carte de circuit d'alimentation électrique (27).

4. Dispositif de phare (10) selon la revendication 3, dans lequel
la partie de carte de feu de position (27b) est exposée à l'extérieur de l'unité réflectrice (23) lorsqu'on regarde depuis l'avant, et
le dispositif de source de lumière auxiliaire (28) est monté sur une surface avant de la partie de carte de feu de position (27b).

5. Dispositif de phare (10) selon l'une quelconque des revendications 1 à 4, dans lequel
chaque dispositif de source de lumière (21) comprend une partie de connexion (35) à laquelle un fil électrique (W2) est connecté, et
la carte de circuit d'alimentation électrique (27) est située devant la partie de connexion (35).

6. Dispositif de phare (10) selon la revendication 5, dans lequel
chaque dispositif de source de lumière (21) comprend un élément à LED (21a) et une carte de LED (21b) sur laquelle l'élément à LED (21a) est monté,
la partie de connexion (35) est un connecteur (35) monté sur la carte de LED (21b), et
le connecteur (35) est situé à l'extérieur de et derrière l'unité réflectrice (23).

7. Dispositif de phare (10) selon la revendication 6, dans lequel
la carte de LED (21b) est placée dans une position où une normale à la carte de LED (21b) s'étend dans une direction allant de haut en bas,
la carte de LED (21b) a une première surface sur laquelle l'élément à LED (21a) est monté et une deuxième surface à l'opposé de la première surface,
un dissipateur thermique (25) est relié à et en contact de surface avec la deuxième surface de la carte de LED (21b), et
le dissipateur thermique (25) a une partie située à l'extérieur de et derrière l'unité réflectrice (23).
